# EUROPEAN PATENT APPLICATION

(11) **EP 4 814 358 A1**
(43) Date of publication of application: **30.09.2026**
(21) Application number: 25165833.2
(22) Date of filing: 25.03.2025
(51) Int. Cl.: F16L 21/00, B60K 15/00, B67D 7/00, F16K 3/00, F16L 37/23, F16L 57/00, F17C 1/00, F17D 5/02, G01M 3/00

(54) **COMMUNICATION MODULE AND CONNECTION COUPLING COMPRISING THE COMMUNICATION MODULE**

(71) Applicant: Oasis Engineering (2003) Ltd, Tauranga 3110 (NZ)
(72) Inventor: Turner, Carl, 4878 Smithfield (AU); Eder, Lance, 3114 Bay of Plenty (NZ)
(74) Representative: GLAWE DELFS MOLL

(57) **Abstract**

Connection coupling (8) for coupling a fluid infeed line with a corresponding coupling member (15). The connection coupling (8) comprises a fluid inlet (17) connectable to the fluid infeed line, a fluid outlet (18) connectable to the coupling member (15), a main channel (13) extending from the fluid inlet (17) to the fluid outlet (18), a coupling section (14) arranged at the fluid outlet (18) and having a receptacle space (60) which is occupied by the coupling member (15) when the coupling is established, and a communication module (61) arranged at an outer circumference of the coupling section (14). The communication module (61) comprises an electronic component (63) and a protection element (62), wherein the electronic component (63) is configured to receive information from and/or to send information to a corresponding communication module (74) of the coupling member (15). The protection element (62) comprises an outer section (66) arranged at a radially outer side of the electronic component (63), an inner section (67) arranged at a radially inner side of the electronic component (63), and a transfer section (68) configured to transfer radial forces from the outer section (66) to the inner section (67). By means of the protection element (62) forces may be beneficially guided around the electronic component.

## Description

The present invention relates to a communication module for a connection coupling. Furthermore, the invention relates to a connection coupling comprising such a communication module.

Connection couplings are used, for instance, for connecting an infeed line to a filler pipe of a vehicle tank to fill a pressurized gas into the tank. The connection coupling is connected to a usually male-type coupling member of the filler pipe in a substantially fluid-tight manner to create a closed system between a fluid reservoir (connected to the infeed line) and the tank. The fluid may then be introduced into the tank at a relatively high pressure without leakage of the fluid into the environment at the transition between the connection coupling and the male coupling member. Connection couplings of this type are used, for example, for dispensing compressed natural gas (CNG) or compressed hydrogen (H2). Furthermore, such connection couplings can be used for both liquids and liquefied gases, for example for dispensing liquefied petroleum gas (LPG), liquefied natural gas (LNG) or liquefied hydrogen (LH2). A connection coupling is known, for instance, from the document US 2014/0264118 A1.

When handling pressurized fluids, great care must be taken to prevent the fluid from being released in an uncontrolled manner. To enhance the safety against uncontrolled leakage and accidents, it is known in the art to provide the mutually opposing front faces of the connection coupling and the coupling member with communication modules being configured to perform transmission and reception of information by exchange of electromagnetic signals such as infrared light, visible light, or the like (see US 10,876,664 B2). By means of the communication modules it is possible to exchange information between a filling pump attached to the connection coupling and the tank. The information may relate to a filling status of the tank or to any problems detected within the tank. Based on the exchange of information, a supply of the pressurized liquid may be adapted or stopped to avoid the occurrence of dangerous situations or accidents.

During use, connection couplings are often subject to considerable mechanical stress. For instance, when a user manually connects the connection coupling to a male coupling member, the front faces of the connection coupling and the male coupling member may inadvertently collide. Moreover, a user may accidentally drop the connection coupling so that it may be damaged when it hits the ground. The mechanical stress caused during operation may cause damage to the communication module.

It is an object of the present invention to provide a communication module and a connection coupling comprising the communication module in which the above-noted disadvantages are avoided or at least reduced. The object is solved by means of the subject matter of the independent claims. Preferable embodiments are described in the dependent claims.

Accordingly, the invention relates to a connection coupling for coupling a fluid infeed line with a corresponding coupling member. The connection coupling comprises a fluid inlet connectable to the fluid infeed line and a fluid outlet connectable to the corresponding coupling member. The connection coupling further comprises a main channel extending from the fluid inlet to the fluid outlet. Moreover, the connection coupling comprises a coupling section arranged at the fluid outlet, wherein the coupling section has a receptacle space which is occupied by the coupling member (15) when the coupling is established. In addition, the connection coupling comprises a communication module arranged at an outer circumference of the coupling section. The communication module comprises an electronic component and a protection element, wherein the electronic component is configured to receive information from and/or to send information to a corresponding communication module of the coupling member. The protection element comprises an outer section arranged at a radially outer side of the electronic component, an inner section arranged at a radially inner side of the electronic component, and a transfer section configured to transfer radial forces from the outer section to the inner section.

By providing the protection element, the electronic component is well protected against external mechanical stresses such as impacts or collisions. As the protection element comprises a section being arranged at a radially outer side and at a radially inner side of the electronic component, and by transferring radial forces from the outer section to the inner section, external forces may be directed around the electronic component to the inside of the connection coupling in a beneficial way.

In an embodiment, the inner section is configured to transfer radial forces received from the outer section towards the coupling section. In an embodiment, the coupling section is a female coupling section, and the receptacle space is an inner receptacle space formed inside the female coupling section for receiving a male coupling member. In this case, the inner receptacle space may allow insertion of a corresponding male coupling member along an axial direction of the inner receptacle space when the coupling is established. The inner section may contact an outer surface of the coupling section. As the coupling section usually has a strong structural integrity, it may easily absorb any forces transferred by the protection element.

In another embodiment, the coupling section is a male coupling section, and the receptacle space is an outer receptacle space which is occupied by a corresponding female coupling member when coupling is established. The outer receptacle space may be arranged radially outwards of the male coupling section. Moreover, the outer receptacle space may encompass the male coupling section around its circumference and may be a ring-shaped space.

The inner section may radially enclose the coupling section over an entire circumference of the coupling section. Moreover, the outer section may radially enclose the coupling section over an entire circumference of the coupling section. The coupling section may have a cylindrical outer shape, wherein the cylinder axis may be aligned with an axis of the receptacle space. The inner section may have an inner surface being formed to correspond to an outer surface of the coupling section. If both the outer section and the inner section of the protection element enclose the coupling section over its entire circumference, forces may be safely transferred from the outside towards the coupling section irrespective of the circumferential position at which the force is exerted. For this purpose, the transfer section may comprise a plurality of radial connecting webs being arranged at different circumferential positions (when viewed along the axis of the receptacle space). This arrangement of webs allows a transfer of radial forces from the outer section to the inner section through the webs being positioned at the different circumferential positions. Between the outer section and the inner section, a ring-shaped space may be formed in which the electronic component may be placed.

In an embodiment, the transfer section is positioned at an axial front side of the communication module. In this way, the transfer section may protect the electronic component against axial forces acting on the communication module. Such axial forces may arise, for instance, during a coupling process. If the coupling section is a female coupling section and the receptacle space is an inner receptacle space, the coupling includes inserting a male coupling member into the inner receptacle space. A misalignment may cause the male coupling member to hit axial front side of the connection coupling, wherein the impact may be absorbed by the transfer section.

The electronic component may comprise an information exchange unit for receiving and/or sending electromagnetic signals. In an embodiment, the electronic component comprises at least two information exchange units for receiving and/or sending electromagnetic signals, wherein the information exchange units are arranged at different circumferential positions of the communication module when viewed along the axial direction. The information exchange units may be transmission units, receiver units or transceiver units. The electronic component may further comprise a circuit board on which the information exchange units are arranged. The electronic component or the circuit board may be ring-shaped and arranged in a ring-space radially inwards of the outer section and radially outwards of the coupling section. The transfer section (or the webs) may be arranged at a circumferential position between a first one and an adjacent second one of the at least two information exchange units. By placing the transfer section (or the webs) between two adjacent information exchange units (with regard to a circumferential direction), the transmission or reception of signals is not impaired by the transfer section.

The transfer section may cover an axial front side of the communication module, wherein the transfer section comprises openings configured to allow passage of the electromagnetic signals. If the transfer section convers the axial front side of the communication module the protection is further enhanced. To provide an enhanced stability and still allow transmission of the electromagnetic signals, the transfer section may comprise openings only at such positions where the information exchange units are arranged.

The communication module may further comprise a cover element being arranged axially in front of the information exchange units and being at least partially transmissive for the electromagnetic signals. The cover element may contact the transfer section. Further, the cover element may be ring-shaped.

In an embodiment, the communication module comprises an inner housing, wherein the electronic component is arranged in the inner housing. Furthermore, the outer section may contact a radially outer side of the inner housing. In addition, the inner section may contact a radially inner side of the inner housing. An inner housing provides a further protection of the electronic component against external forces.

The inner housing may comprise one or more openings being positioned axially in front of the communication module, wherein the one or more openings are configured to allow transfer of electromagnetic signals. The opening may be ring-shaped. The above-noted cover element may have a shape being suitable to close the opening of the inner housing.

In an embodiment, the electronic component is at least partially encapsulated in a protective material such as a resin. The inner housing may be filled with the protective material at least partially.

The communication module may comprise a connecting cable connected to the electronic component and configured to transfer electrical signals to and/or from the electronic component. The connecting cable may be guided through an opening in an axial rear side of the communication module. Moreover, the connecting cable may be guided through an opening in an axial rear side of the inner housing.

The protection element may be made in one piece and may consist of a single material or of two or more materials being joined together in a material-locking or material bonding manner. In particular, the protection element may comprise or consist of a metal or a metal alloy.

The invention furthermore relates to a communication module for a connection coupling. The connection coupling is configured for coupling a fluid infeed line with a corresponding coupling member, wherein the connection coupling comprises a receptacle space which is occupied by the coupling member when the coupling is established. The communication module is configured to be arranged at an outer circumference of the coupling section. The communication module comprises an electronic component and a protection element, wherein the electronic component is configured to receive information from and/or to send information to a corresponding communication module of the coupling member. The protection element further comprises an outer section arranged at a radially outer side of the electronic component, an inner section arranged at a radially inner side of the electronic component, and a transfer section configured to transfer radial forces from the outer section to the inner section.

The present disclosure comprises further embodiments of the inventive communication module comprising additional features which have already been described above in relation with the connection coupling.

In the following, the invention is further explained by means of exemplary embodiments and with reference to the attached drawings, which show:
- Fig. 1:: a connection coupling according to the invention in a first three-dimensional side view;
- Fig. 2:: the connection coupling of Figure 1 in a second three-dimensional side view;
- Fig. 3:: a partially cut side view of the connection coupling of Figure 1 after establishing a connection with a filler pipe;
- Fig. 4:: an enlarged view of sub-area A illustrated in Fig-ure 3;
- Fig. 5:: a schematic cross-sectional view of a front part of the connection coupling of Figure 1 comparable to the view of Figure 4 but taken along a different sectional plane;
- Fig. 6:: a partly cut front view onto the connection coupling of Figure 1;
- Fig. 7:: a three-dimensional side view of an electronic component of the embodiment of Figure 1.

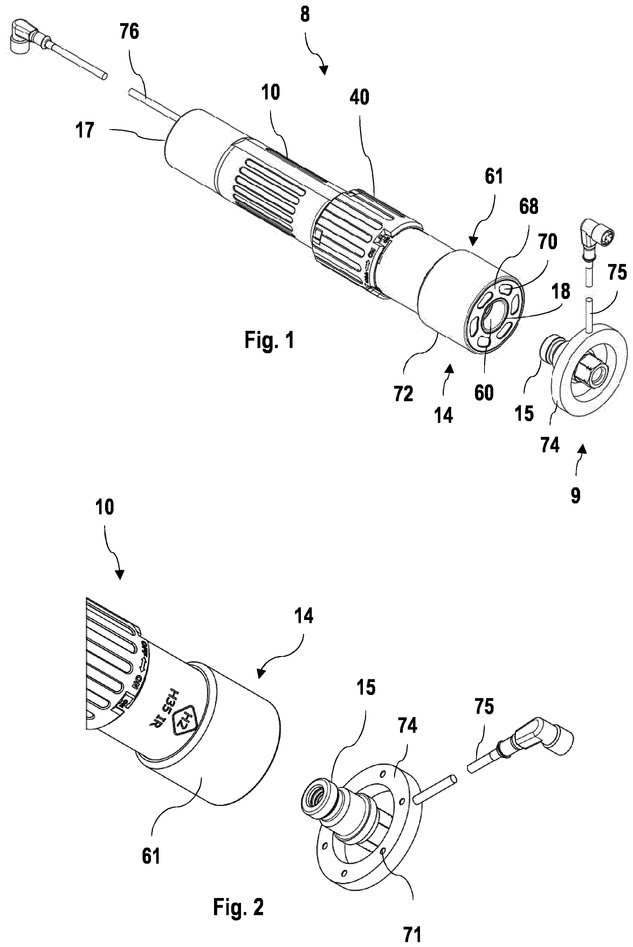

Figure 1 shows a connection coupling 8 according to the invention in a three-dimensional side view. The connection coupling 8 is designed to dispense compressed hydrogen into a tank of a vehicle. For this purpose, the connection coupling is configured as a female connection coupling which may be connected to a male coupling member 15 of a filler pipe 9 of the tank. Both the connection coupling 8 and the filler pipe 9 comprise communication modules 61, 74 allowing exchange of information therebetween.

The connection coupling 8 comprises a housing 10 having a fluid inlet 17 for connection to a fluid infeed line and positioned at a rear end thereof. Moreover, the connection coupling comprises a fluid outlet 18 formed at a front end thereof. Within the housing 10 a main channel (not visible in Figure 1) connects the fluid inlet 17 with the fluid outlet 18 and a main valve (not visible in Figure 1) for controlling fluid flow through the main channel is provided. For connecting the connection coupling 8 with the filler pipe 9, the male coupling member 15 of the filler pipe 9 may be inserted into an inner receptacle space 60 formed radially within a female coupling section 14 arranged at the front end of the connection coupling 8. The connection may be achieved by aligning the connection coupling 8 relative to the filler pipe 9 (so that an axial direction of the inner receptacle space 60 coincides with an axial direction of the male coupling member 15) and by subsequently moving the connection coupling 8 towards the filler pipe 9. Once the male coupling member 15 reaches an end position within the inner receptacle space 60, a fluid tight connection is established and the male coupling member 15 may be locked with the connection coupling in a generally known manner by means of a locking mechanism of the connection coupling (see, for instance, WO 2021/009283 A1).

The connection coupling 8 further comprises an actuating mechanism for actuating the main valve and the locking. The actuating mechanism comprises a grip element 40 which surrounds an outer portion of the housing 10. The grip element 40 is rotatable relative to the housing 10 to allow an actuation of both the main valve and the locking mechanism of the connection coupling 8. The axis of rotation of the grip element corresponds to a longitudinal axis of the connection coupling. The longitudinal axis may coincide with the axis of the inner receptacle space 60. Once the male coupling member 15 is locked to the connection coupling and the main valve is opened, a fluid is dispensed via the main channel 13 and an inner channel of the filler pipe 9 into the tank.

Even though the present embodiment is a connection coupling having a main valve and an actuating mechanism, the present invention is not limited thereto and may also be realized in a connection coupling which does not have a main valve and locking mechanism being controllable by an actuating mechanism.

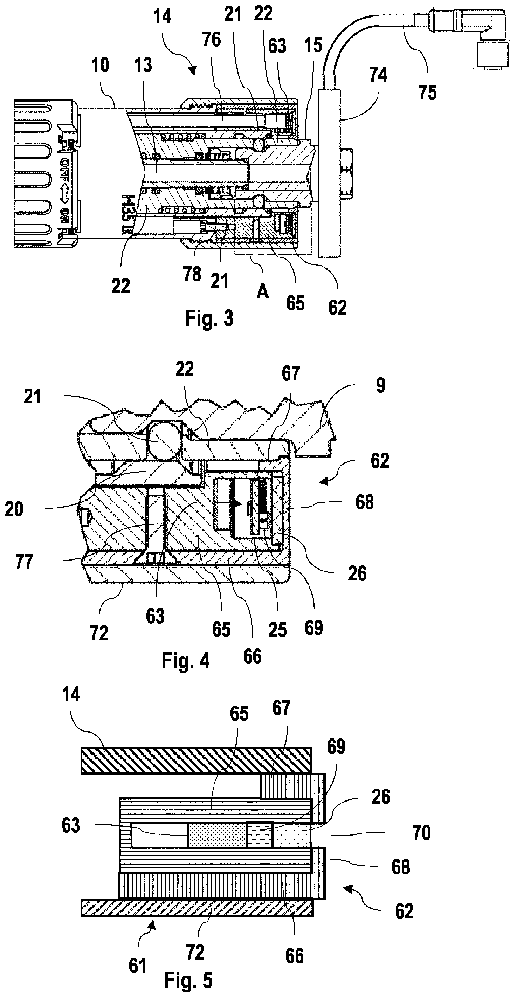

At its front end, the connection coupling 8 comprises a communication module 61 which radially encloses the coupling section 14 over an entire circumference of the coupling section 14. The communication module 61 has an outer protective cover 72 which may be made of an elastic material and a transfer section 68 having openings 70. The openings 70 allow transmission of electromagnetic signals so that information may be exchanged between the communication module 61 and the communication module 74 of the filler pipe 9. Both communication modules 74, 75 are electrically connected by means of cables 75, 76. Cable 76 extends from the communication module 61 through the housing 10 and connects the communication module 61 to a control unit (not shown in Figure 1). Details of the communication module 61 will be further explained below in relation with Figures 3-7.

Figure 2 shows the connection coupling 8 of Figure 1 in a three-dimensional side view from a different perspective. In this perspective openings 71 in a housing of the communication module 74 of the filler pipe 9 are visible. When a connection between the connection coupling and the filler pipe 9 is established, an exchange of information may take place by transmission of electromagnetic signals through the openings 70, 71.

Figure 3 shows a partially cut side view of the connection coupling of Figure 1 after establishing a connection with the filler pipe 9. In this state, the male coupling member 15 resides in the inner receptacle space 60 and is locked to the connection coupling by means of a locking mechanism formed at the coupling section 14. In particular, the coupling section 14 comprises an inner stator shell 22, an outer slidable sleeve 20, and locking elements 21 for locking the male coupling member 15 to the connection coupling 8. The working principle of the locking mechanism is generally known, for instance, from WO 2021/009283 A1 and further details thereof are therefore omitted.

In the view of Figure 3 the communication module 61 is arranged radially outward of the inner stator shell 22 and of the outer slidable sleeve 20. The communication module 61 comprises a protection element 62 and an electronic component 63 which is housed in an inner housing 65 of the communication module 61. The inner housing 65 is secured to an integral part of the housing 10 by means of a fastening element 78. Moreover, Figure 3 shows that the outer protective cover 72 is screwed onto a forward end of the housing 10. More details of the communication module 61 are described below in relation with Figure 4.

Figure 4 shows an enlarged view of area A illustrated in Figure 3. Figure 4 shows that the protection element 62 comprises an inner section 67 positioned radially inward of the electronic component 63, an outer section 66 arranged radially outward of the electronic component 63 and a transfer section 68 which connects the inner section 67 with the outer section 66. The protection element 62 is made in one piece from a metal material. Although not visible in Figure 4, the protection element 62 (i.e., the inner section 67 and outer section 66) fully enclose the coupling section 14 at the front end of the connection coupling about an entire circumference thereof.

The protection element 62 is secured to the inner housing 65 by means of a fastening element 77 (such as a screw bolt). Similar as the protection element 62, the inner housing 65 likewise fully encloses the coupling section 14 about an entire circumference thereof. Within the housing 65 a ring-space is formed within which the electronic component 63 is positioned. The electronic component 63 comprises a ring-shaped circuit board 25 and information exchange units 69 being arranged on the circuit board 25. An axially rearward space of the housing is filled with a protective material so that the circuit board 25 is at least partially encapsulated within the protective material. The information exchange units 69 are configured for receiving infrared signals. In different embodiments, the information exchange units 69 may be configured to send infrared signals or to both send and receive infrared signals. At an axial front end, the housing 65 has a ring-shaped opening. The opening is closed by means of a protective element 26 (such as a protective pane) being transmissive for the infrared light emitted and/or received by the information exchange units.

A relative arrangement of the information exchange units 69 with respect to the openings 70 as well as a geometry of the openings 70 ensure that the information exchange units 69 are always in a field of view of corresponding information exchange units of the communication module 74 so that infrared signals may be exchanged irrespective of a circumferential alignment of the communication module 61 of the connection coupling 8 with respect to the communication module 74 of the filler pipe 9.

An inner surface of the outer section 66 and an outer surface of the inner section 67 directly contact the inner housing 65. Furthermore, an inward-facing surface of the inner section 67 directly contacts the stator shell 22. The configuration of the protection element 62 allows a beneficial transfer of radial forces acting on the outer protective cover 72 (which are directed from bottom to top in the image plane of Figure 4) towards the inner stator shell 22. In particular, such forces are received by the outer section 66, radially transferred (upwards in figure 4) via the transfer section 68 to the inner section 67 and from the inner section 67 to the inner stator shell 22. In addition, the transfer section 68 protects the protective pane 26 against axial forces. Accordingly, damages to the electronic component 63 are prevented by the protection element 62 by guiding radial forces around the electronic component 63 and by preventing axial forces to act on the protective pane 26.

Figure 5 shows a schematic sectional view of a front part of the connection coupling comparable to the view of Fig-ure 4 but taken along a different sectional plane. Elements which have already been described in relation with Figure 4 have the same reference numerals. To simplify the schematic view, the slidable sleeve 20 and inner stator shell 22 are illustrated as a single-element coupling section 14. In the sectional view of Figure 5, an opening 70 in the transfer section 68 is provided axially in front of the information exchange unit 69 and protective pane 26. The opening 70 allows passage of infrared signals sent from or received by the information exchange unit 69.

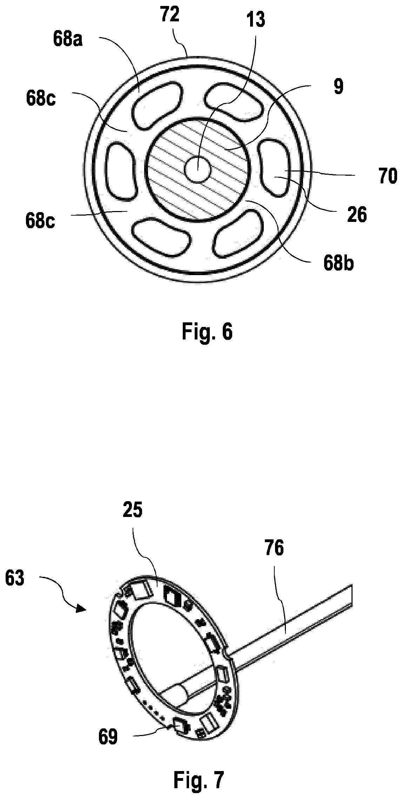

Figure 6 shows a partly cut front view onto the connection coupling 8. In this view the transfer section 68 comprises an outer ring-shaped element 68a, an inner ring-shaped element 68b and a number of six connecting webs 68c connecting the inner ring-shaped element 68b with the outer ring-shaped element 68a. A number of six openings 70 is provided, each of the openings being arranged between two adjacent webs 68c.

Figure 7 shows a three-dimensional side view of the electronic component 63 of the embodiment of Figure 1 as well as the connection cable 76 attached thereto. In this view the circuit board is shown to have a shape of an annular disk with a small height along the axial direction, wherein the information exchange units 69 are placed on the disk-shaped surface.

## Claims

1. Connection coupling (8) for coupling a fluid infeed line with a corresponding coupling member (15), wherein the connection coupling (8) comprises a fluid inlet (17) connectable to the fluid infeed line, a fluid outlet (18) connectable to the coupling member (15), a main channel (13) extending from the fluid inlet (17) to the fluid outlet (18), a coupling section (14) arranged at the fluid outlet (18) and having a receptacle space (60) which is occupied by the coupling member (15) when the coupling is established, and a communication module (61) arranged at an outer circumference of the coupling section (14), wherein the communication module (61) comprises an electronic component (63) and a protection element (62), wherein the electronic component (63) is configured to receive information from and/or to send information to a corresponding communication module (74) of the coupling member (15), wherein the protection element (62) comprises an outer section (66) arranged at a radially outer side of the electronic component (63), an inner section (67) arranged at a radially inner side of the electronic component (63), and a transfer section (68) configured to transfer radial forces from the outer section (66) to the inner section (67).

2. Connection coupling (8) according to claim 1, wherein the inner section (67) is configured to transfer radial forces received from the outer section (66) radially inwards towards the coupling section (14).

3. Connection coupling (8) according to claim 2, wherein the inner section (67) radially encloses the coupling section (14) over an entire circumference of the coupling section (14).

4. Connection coupling (8) according to claim 2 or 3, wherein the outer section (66) radially encloses the coupling section (14) over an entire circumference of the coupling section (14).

5. Connection coupling (8) according to one of claims 1 to 4, wherein the transfer section (68) may comprise a plurality of radial connecting webs being arranged at different circumferential positions to allow a transfer of radial forces from the outer section (66) to the inner section (67) at the different circumferential positions.

6. Connection coupling (8) according to one of claims 1 to 4, wherein the coupling section (14) is a female coupling section and the receptacle space (60) is an inner receptacle space formed inside the female coupling section for receiving a male coupling member (15), wherein, preferably, the inner section (67) contacts an outer surface of the coupling section (14).

7. Connection coupling (8) according to one of claims 1 to 6, wherein the transfer section (68) is positioned at an axial front side of the communication module.

8. Connection coupling (8) according to one of claims 1 to 7, wherein the electronic component (63) comprises at least two information exchange units (69) for receiving and/or sending electromagnetic signals, wherein the information exchange units (69) are arranged at different circumferential positions of the communication module (61) when viewed along the axial direction, wherein the transfer section (68) is arranged at a circumferential position between a first one and a second one of the at least two information exchange units (69).

9. Connection coupling (8) according to claim 8, wherein the transfer section (68) covers an axial front side of the communication module (61), wherein the transfer section (68) comprises openings (70) configured to allow passage of the electromagnetic signals.

10. Connection coupling (8) according to claim 9, wherein the communication module comprises a cover element being arranged axially in front of the information exchange units (69) and being at least partially transmissive for the electromagnetic signals.

11. Connection coupling (8) according to one of claims 1 to 10, wherein the communication module (61) comprises an inner housing (65), wherein the electronic component (63) is arranged in the inner housing (65), wherein, preferably, the outer section (66) contacts a radially outer side of the inner housing (65) and wherein the inner section (67) contacts a radially inner side of the inner housing (65).

12. Connection coupling (8) according to claim 11, wherein the inner housing (65) comprises one or more openings axially in front of the communication module (61) to allow transfer of electromagnetic signals.

13. Connection coupling (8) according to one of claims 1 to 12, wherein the electronic component is encapsulated in a protective material.

14. Connection coupling (8) according to one of claims 1 to 13, wherein the protection element is made of a metal or a metal alloy.

15. Communication module (61) for a connection coupling (8), the connection coupling being configured for coupling a fluid infeed line with a corresponding coupling member (15), wherein the connection coupling (8) comprises a receptacle space (60) which is occupied by the coupling member (15) when the coupling is established, wherein the communication module (61) is configured to be arranged at an outer circumference of the coupling section (14), wherein the communication module (61) comprises an electronic component (63) and a protection element (62), wherein the electronic component (63) is configured to receive information from and/or to send information to a corresponding communication module (74) of the coupling member (15), wherein the protection element (62) comprises an outer section (66) arranged at a radially outer side of the electronic component (63), an inner section (67) arranged at a radially inner side of the electronic component (63), and a transfer section (68) configured to transfer radial forces from the outer section (66) to the inner section (67).
